# EUROPEAN PATENT APPLICATION

(11) **EP 4 531 368 A1**
(43) Date of publication of application: **02.04.2025**
(21) Application number: 24202409.9
(22) Date of filing: 25.09.2024
(51) Int. Cl.: H04L 45/741, H04L 45/74

(54) **METHODS FOR CONTROLLING NETWORK TRAFFIC WITH A SUBSCRIBER-AWARE DISAGGREGATOR AND METHODS THEREOF**

(30) Priority: 28.09.2023 US 202318374466
(71) Applicant: F5, INC., Seattle, WA 98104 (US)
(72) Inventor: JAGANNATHARAO, Manjunath T., Seattle (US); KOENNING, Christian Josef, Seattle (US); FREEMAN, Arthur William James, Seattle (US)
(74) Representative: Savi, Massimiliano

(57) **Abstract**

Methods, network traffic management devices, non-transitory computer readable media, and network traffic management systems that control network traffic with a subscriber-aware disaggregator include mapping a network address in a network packet received from a client to one of a plurality of subscribers in a subscriber database. A master network address for the one of the subscribers is identified from the mapped network address, where the subscriber has at least one other network address associated with the one of the subscribers. The network packet is routed to a determined one of a plurality of processing nodes and processing threads based on the master network address for the one of the subscribers.

## Description

### FIELD

This technology generally relates to methods and systems for controlling network traffic with a subscriber-aware disaggregator and methods thereof.

### BACKGROUND

Network traffic management computing systems are typically added to perform security, processing, and/or routing functions between client devices seeking access to and interacting with server computing devices. These network traffic management computing systems can be configured to provide threads in Cloud Native Network Functions (CNFs) that scale horizontally as the network load being served increases. In these prior traffic management computing system traffic can be directed to a particular one of the threads by a disaggregator to enable enforcement of executable network traffic policy actions on this traffic from a subscriber, such as bandwidth control or traffic management.

Unfortunately, existing disaggregators are only capable of directing network traffic based on a single source or destination IP address to a single thread in one of the CNFs and a subscriber can generate traffic from multiple IP addresses. For example, a single mobile phone can get allocated multiple IPv4/IPv6 addresses which can cause issues with managing network traffic and enforcing necessary policies for this subscriber.

### SUMMARY

A method implemented by a network traffic management system including one or more server devices, host devices or client devices that map a network address in a network packet received from a client to one of a plurality of subscribers in a subscriber database. A master network address for the one of the subscribers is identified from the mapped network address, where the subscriber has at least one other network address associated with the one of the subscribers. The network packet is routed to a determined one of a plurality of processing nodes and processing threads based on the master network address for the one of the subscribers.

A network traffic management apparatus includes a memory including programmed instructions stored thereon and one or more processors configured to be capable of executing the stored programmed instructions to map a network address in a network packet received from a client to one of a plurality of subscribers in a subscriber database. A master network address for the one of the subscribers is identified from the mapped network address, where the subscriber has at least one other network address associated with the one of the subscribers. The network packet is routed to a determined one of a plurality of processing nodes and processing threads based on the master network address for the one of the subscribers.

A non-transitory computer readable medium having stored thereon instructions for including executable code that, when executed by one or more processors, causes the processors to map a network address in a network packet received from a client to one of a plurality of subscribers in a subscriber database. A master network address for the one of the subscribers is identified from the mapped network address, where the subscriber has at least one other network address associated with the one of the subscribers. The network packet is routed to a determined one of a plurality of processing nodes and processing threads based on the master network address for the one of the subscribers.

A network traffic management system, comprising one or more server devices, network traffic management apparatuses or client devices with memory comprising programmed instructions stored thereon, and one or more processors configured to be capable of executing the stored programmed instructions to map a network address in a network packet received from a client to one of a plurality of subscribers in a subscriber database. A master network address for the one of the subscribers is identified from the mapped network address, where the subscriber has at least one other network address associated with the one of the subscribers. The network packet is routed to a determined one of a plurality of processing nodes and processing threads based on the master network address for the one of the subscribers.

This technology provides a number of advantages including providing methods, non-transitory computer readable media, network traffic management apparatuses, and network traffic management systems that effectively control network traffic with a subscriber-aware disaggregator. Examples of this technology are, in real time, configured to aggregate all of the network traffic of a subscriber having multiple IP address into a single thread of one of a plurality of network processing nodes. With traffic of a subscriber aggregated to a single thread, examples of this technology can more effectively enforce any applicable policies to manage the network traffic for the subscriber.

### BRIEF DESCRIPTION OF THE DRAWINGS

FIG. 1 is a block diagram of an exemplary network traffic management system with an exemplary network traffic management apparatus configured to control network traffic with a subscriber-aware disaggregator;
FIG. 2 is a block diagram of the exemplary network traffic management apparatus shown in FIG. 1;
FIG. 3 is a functional block diagram of an example architecture for controlling network traffic in a subscriber-aware manner; and
FIG. 4 is a flowchart of an exemplary method for controlling network traffic with a subscriber-aware disaggregator.

### DETAILED DESCRIPTION

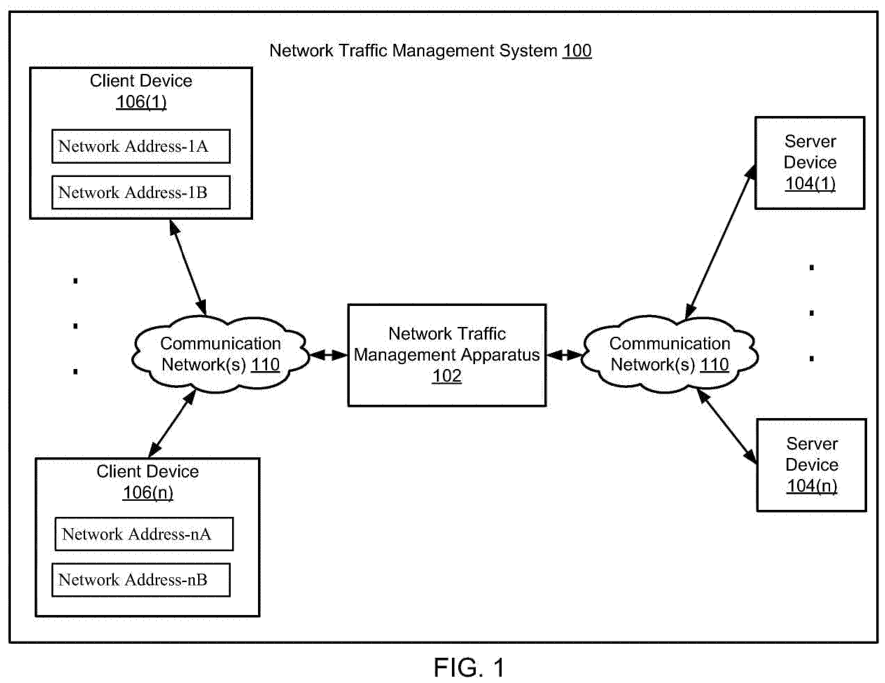

Referring to FIG. 1, an exemplary network traffic management system 100 configured to control network traffic with a subscriber-aware disaggregator is illustrated. The network traffic management system 100 in this example includes a network traffic management apparatus 102 that is coupled to server devices 104(1)-104(n), and client devices 106(1)-106(n) via communication network(s) 110, although network traffic management apparatus 102, server devices 104(1)-104(n), and client devices 106(1)-106(n) may be coupled together via other topologies. The network traffic management system 100 also may include other network devices which are known in the art and thus will not be described herein. This technology provides a number of advantages including methods, network traffic management apparatuses, non-transitory computer readable media, and network traffic management systems that are configured to control network traffic with a subscriber-aware disaggregator.

With examples of this technology, a service provider can provide a network for use by subscribers using one or more client devices 106(1)-106(n) to interact with one or more server devices 104(1)-104(n). As the number of subscribers using one or more client devices 106(1)-106(n) and the amount of information passed increases, the hardware and software resources of the network will be increased to accommodate the additional network traffic. The service provider can control the usage of the network by setting policies for use. For example, the policies can include bandwidth quotas or other types of network traffic management rules for different subscribers at the client devices 106(1)-106(n). However, to implement these policies, the network traffic of the subscribers at the client devices 106(1)-106(n) needs to be aggregated, monitored and/or processed on one thread.

In one exemplary architecture, the network traffic of the different subscribers at the client devices 106(1)-106(n) can be aggregated, processed, and then forwarded to intended destinations (e.g., server devices 104(1)-104(n)) by a network traffic management apparatus 102.

As used herein, network traffic can include one or more network packets that are sent from or addressed to one or more subscribers at one or more of the client devices 106(1)-106(n). The network traffic of a given subscriber at one of the client devices 106(1)-106(n) includes one or more network packets comprising network traffic that are sent from or addressed to the given subscriber at the one of the client devices 106(1)-106(n). Processing the network traffic can further include applying policies to identified subscribers to determine whether and how the network traffic is forwarded through the network. To increase the number of subscribers that can use the network, the aggregated network traffic can be distributed to a number of network processing nodes 230(1)-230(n) of the network traffic management system 100 which in this example are shown as part of the network traffic management apparatus 102, but in other examples may be implemented in other configurations at other locations.

As illustrated and described by way of examples herein, the network traffic management apparatus 102 of the network traffic management system 100 can include programmed instructions and/or control logic to manage network traffic with a subscriber-aware disaggregator which utilizes a subscriber database 212. In this example, a source network address can be used as a key into the subscriber database 214 and the subscriber policies database 214 that includes network addresses and a designated master network address and also policies associated with each of the subscribers, such as policies for managing network traffic of the subscribers at one or more of the client devices 106(1)-106(n) which can be utilized by the network processing nodes 230(1)-230(n) to process network traffic. Examples of this technology are, in real time, configured to aggregate the network traffic of a subscriber at one of the client devices 106(1)-106(n) having multiple network addresses into a single one of the threads T1-T4 of one of a plurality of network processing nodes 230(1)-230(n), although other numbers of processing nodes and/or threads can be used. With traffic of a subscriber at one of the client devices 106(1)-106(n) aggregated to a single thread, examples of this technology can more effectively manage the network traffic and enforce any applicable policies from subscriber policies database 214 for the subscriber at one of the client devices 106(1)-106(n) as illustrated and described by way of the examples herein.

In the following description, for the purpose of explanation, numerous specific details are set forth in order to provide a thorough understanding of examples of the technology. It will be apparent, however, that examples of the technology may be practiced without these specific details. In other instances, well-known structures and devices are shown in block diagram form in order to avoid unnecessarily obscuring examples of the technology.

It will be further understood that: the term "or" may be inclusive or exclusive unless expressly stated otherwise; the term "set" may comprise zero, one, or two or more elements; the terms "first", "second", "certain", and "particular" are used as naming conventions to distinguish elements from each other and does not imply an ordering, timing, or any characteristic of the referenced items unless otherwise specified; the terms "such as", "e.g.," "for example", and the like describe one or more examples but are not limited to the described examples(s); the term "comprises" and/or "comprising" specify the presence of stated features, but do not preclude the presence or addition of one or more other features.

A "computer system" or "computing apparatus" refers to one or more computers, such as one or more physical computers, virtual computers, and/or other computing systems or devices. As an example, a computer system or computing apparatus may be, or may include, one or more server computers, cloud-based computers, cloud-based cluster of computers, virtual machine instances or virtual machine computer elements such as virtual processors, storage and memory, data centers, storage devices, desktop computers, laptop computers, mobile devices, or any other special-purpose computing devices. Any reference to a "computer system" or "computing apparatus" herein may mean one or more computers, unless expressly stated otherwise. When a computer system or computing apparatus performs an action, the action is performed by one or more computers of the computer system or computing apparatus.

A "client" (also referred to as a "client device") refers to a combination of integrated software components and an allocation of computational resources, such as memory, a computing device, and processes on a computing device for executing the integrated software components. The combination of the software and computational resources are configured to interact with one or more servers over a network, such as the Internet. A client may refer to either the combination of components on one or more computers, or the one or more computers.

A "server" (also referred to as a "server system", "server computer system", "server device" or "server apparatus") refers to a combination of integrated software components and an allocation of computational resources, such as memory, a computing device, and processes on the computing device for executing the integrated software components. The combination of the software and computational resources provide a particular type of function on behalf of clients of the server. A server may refer to either the combination of components on one or more computers, or the one or more computers. A server may include multiple servers; that is, a server may include a first server computing device and a second server computing device, which may provide the same or different functionality to the same or different set of clients.

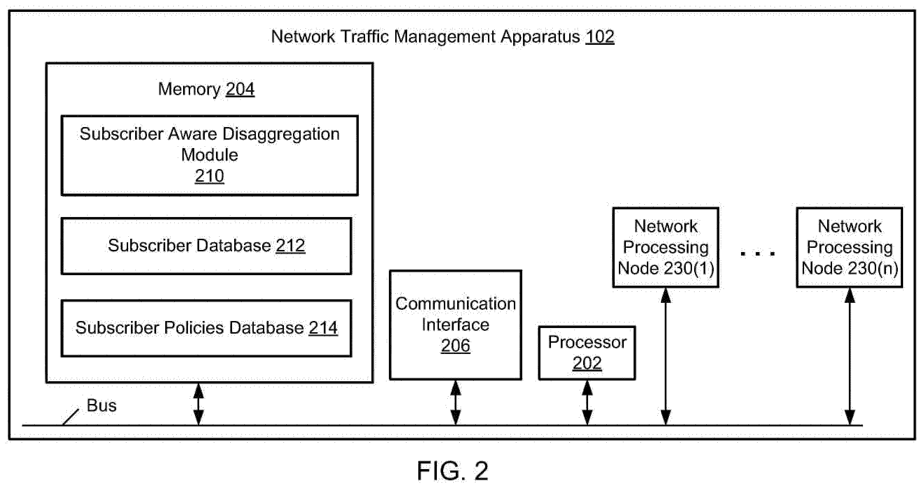

In this example illustrated in FIGS. 1-5, the network traffic management system 100 includes the network traffic management apparatus 102, server devices 104(1)-104(n), and client devices 106(1)-106(n), although the system could have other types and/or numbers of other systems, devices, components and/or other elements which may be in other configurations. In some examples, one or more of the network traffic management apparatus 102, the server devices 104(1)-104(n), and the client devices 106(1)-106(n) or portions thereof can also be implemented in hardware and/or software within one or more other devices in the network traffic management system 100. Although the description herein is generally directed to a system that is distributed across multiple devices, it should be understood that it is contemplated that the techniques disclosed herein could alternatively be adapted for use in other manners.

Referring to FIGS. 1-2, the network traffic management apparatus 102 of the network traffic management apparatus system 100 may perform any number of functions and other operations, such as for example, controlling network traffic with a subscriber-aware disaggregator. The network traffic management apparatus 102 in this example includes processor 202, a memory 204, a communication interface 206, and the network processing nodes 230(1)-230(n) which are coupled together by a bus, although the network traffic management apparatus 102 can include other types or numbers of elements in other configurations. In this example, the network processing nodes 230(1)-230(n) are shown as part of the network traffic management apparatus 102, but in other examples may be implemented in other configurations at other locations.

The processor 202 of the network traffic management apparatus 102 may execute programmed instructions stored in the memory 204 of the network traffic management apparatus 102 for any number of functions as described and illustrated by way of the examples herein. The processor 202 of the network traffic management apparatus 102 may include one or more central processing units (CPUs) or general-purpose processors with one or more processing cores, for example, although other types of processor(s) can also be used.

The memory 204 of network traffic management apparatus 102 stores these programmed instructions for one or more aspects of the present technology as described and illustrated herein, although some or all of the programmed instructions could be stored elsewhere. A variety of different types of memory storage devices, such as RAM, ROM, hard disk, solid state drives, flash memory, or other computer readable medium which is read from and written to by a magnetic, optical, or other reading and writing system that is coupled to the processor(s), can be used for the memory.

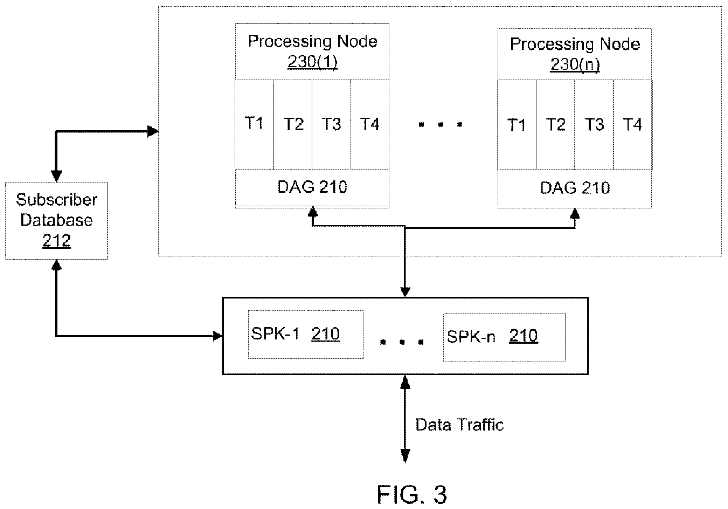

Accordingly, the memory 204 of the network traffic management apparatus 102 can store one or more modules and/or other databases that can include computer executable instructions and/or other data that, when executed or utilized by the network traffic management apparatus 102, cause the network traffic management apparatus 102 to perform actions, such as those described and illustrated below with reference to FIGS. 3-4. The modules can be implemented as components of other modules. Further, the modules can be implemented as applications, operating system extensions, plugins, or the like.

Even further, in some examples, the modules may be operative in a cloud-based computing environment. The modules can be executed within or as virtual machine(s) or virtual server(s) that may be managed in a cloud-based computing environment. Also, the modules, and even the network traffic management apparatus 102 itself, may be located in virtual server(s) running in a cloud-based computing environment rather than being tied to one or more specific physical network computing devices. Also, the modules may be running in one or more VMs executing on the network traffic management apparatus 102. Additionally, in one or more examples of this technology, virtual machine(s) running on the network traffic management apparatus 102 may be managed or supervised by a hypervisor.

In this particular example, the memory 204 of the network traffic management apparatus 102 includes a subscriber aware disaggregation module 210, a subscriber database 212, and a subscriber policies database 214, although the memory can comprise other types and numbers of modules, databases, and/or other storage elements. In some examples, the subscriber aware disaggregation module 210 may include software comprising programmed instructions installed on network traffic management apparatus 102 that can control network traffic with a subscriber-aware disaggregator and the subscriber database 212 as illustrated and disclosed by way of the examples herein, although other approaches may be used. Additionally, in some examples, the subscriber database 212 may include subscriber identification information mapped in some examples to two or more associated network addresses, such as an Internet Protocol version four (IPv4) address and an Internet Protocol version six (IPv6) address, although other types of programmed instructions, data, and other information may be stored here. Further in this example, the subscriber database 212 may identify one of the network addresses associated with a particular subscriber as the master network address. Even further in this example, the source IP address in the header of the network packet from the requesting one of the subscriber at one of the client devices 106(1)-106(n) may be used as the network address used for this mapping, although other network addresses, such as the destination IP address by way of example, can be used in place of or with the source IP address in other examples. In some examples, the subscriber policies database 214 may store on network traffic management apparatus 102 executable network traffic policy actions associated with each of a plurality of subscribers, such as bandwidth and/or quota limits, load balancing, rate monitoring and metering, caching, denial of service protection, encryption/decryption, session management, address translation, and/or access control by way of example only, although the executable network traffic policy actions and other network traffic management executable rules can be stored and/or retrieved in other manners.

As shown in FIG. 1, the network traffic management apparatus 102 may be positioned between the server devices 104(1)-104(n) and the client devices 106(1)-106(n), such that the network traffic management apparatus 102 can identify a subscriber at one of the client devices 106(1)-106(n) based on a mapping in the subscriber database 212 before taking an action on the received network traffic packet from the subscriber at one of the client devices 106(1)-106(n). As illustrated in the example in FIG. 1, subscribers at one or more of the client devices 106(1)-106(n) may have multiple network addresses associated with a particular subscriber, such as network addresses 1A and 1B associated with a "subscriber 1" and network addresses nA and nB associated with a "subscriber n", by way of example only.

The communication interface 206 of the network traffic management apparatus 102 operatively couples and communicates between combinations of the network traffic management apparatus 102, the server devices 104(1)-104(n), and the client devices 106(1)-106(n), which are coupled together at least in part by the communication network(s) 110, although other types or numbers of communication networks or systems with other types or numbers of connections or configurations to other devices or elements can also be used.

By way of example only, the communication network(s) 110 can include local area network(s) (LAN(s)) or wide area network(s) (WAN(s)), and can use TCP/IP over Ethernet and industry-standard protocols, although other types or numbers of protocols or communication networks can be used. The communication network(s) 110 in this example can employ any suitable interface mechanisms and network communication technologies including, for example, teletraffic in any suitable form (e.g., voice, modem, and the like), Public Switched Telephone Network (PSTNs), Ethernet-based Packet Data Networks (PDNs) hosting HyperText Transfer Protocol (HTTP), combinations thereof, and the like. The communication network(s) may also include local connections between the server devices 104(1)-104(n), and/or the client devices 106(1)-106(n) and the network traffic management apparatus 102, such as direct Wi-Fi connections, Bluetooth connections, near-field communication, direct wired connections, or any other method of the server devices 104(1)-104(n), and/or the client devices 106(1)-106(n) communicating directly or indirectly with network traffic management apparatus 102.

In this example, each of the network processing nodes 230(1)-230(n) is a computing device or element (e.g., hardware, software, or a combination thereof) that can transmit and/or receive a network packet. Each of the network processing nodes 230(1)-230(n) may include processor(s), memory, and a communication interface, which are coupled together by a bus or other communication link, although other numbers or types of components other elements which can be in different configurations can be used. Each of the network processing nodes 230(1)-230(n) can be transparent to the subscriber at one of the client devices 106(1)-106(n) and positioned as an intermediate destination between the subscriber at one of the client devices 106(1)-106(n) and the source or destination of the network packet at one of the server devices 104(1)-104(n).

According to other examples, the network traffic management apparatus 102 may be any type of computing device, such as a server device by way of example. In this example, the network traffic management apparatus 102 is illustrated as a single device, but in other examples can comprise multiple devices, each of which has processor(s) (each processor with processing core(s)) that implement step(s) of this technology. In these examples, one or more of the devices can have a dedicated communication interface or memory. Alternatively, one or more of the devices can utilize the memory 204, communication interface 206, or other hardware or software components of one or more other of the devices included in the network traffic management apparatus 102.

Accordingly, one or more of the devices that together comprise the network traffic management apparatus 102 can be standalone devices or integrated with one or more other devices or apparatuses, such as one or more of the server devices 104(1)-104(n), for example. Moreover, one or more of the devices of the network traffic management apparatus 102 can be in a same or a different communication network including one or more public, private, or cloud networks, for example. In yet other examples, a plurality of network traffic management apparatuses 102 may be deployed, within and/or outside of a local area network associated with the server devices 104(1)-104(n), which communicate with any number of application servers or end station computers, and which have other network topologies.

Referring back to FIG. 1, the server devices 104(1)-104(n) of network traffic management system 100 in this example may for example be web server(s) hosting one or more associated web applications or other resources that is/are accessible by client devices 106(1)-106(n). According to some examples, the server devices 104(1)-104(n) may be secure servers that are only accessible by authorized subscribers. For example, one of the client devices 106(1)-106(n) requesting to access one of the server devices 104(1)-104(n) may first need to be identified before an action can be determined with respect to allowing this request.

Each of the server devices 104(1)-104(n) may include processor(s), memory, and a communication interface, which are coupled together by a bus or other communication link, although other numbers or types of components other elements which can be in different configurations can be used. The server devices 104(1)-104(n) in this example can include application servers or database servers, for example, although other types of server devices 104(1)-104(n) can also be included in the network traffic management system 100.

Although the server devices 104(1)-104(n) are illustrated as single devices, one of the server devices 104(1)-104(n) in other examples may include multiple servers distributed across one or more distinct network computing devices that together server device 104. Moreover, the server devices 104(1)-104(n) are not limited to a particular configuration. Thus, the server devices 104(1)-104(n) may contain network computing devices that operate using a master/slave approach, whereby one of the network computing devices of the server devices 104(1)-104(n) operates to manage or otherwise coordinate operations of the other network computing devices. One of the server devices 104(1)-104(n) may operate as a plurality of network computing devices within a cluster architecture, a peer-to peer architecture, virtual machines, or within a cloud architecture, for example.

Thus, the technology disclosed herein is not to be construed as being limited to a single environment and other configurations and architectures are also envisaged. Accordingly, any number of network traffic management apparatuses 102, server devices 104(1)-104(n), and client devices 106(1)-106(n) may be used. The number of network traffic management apparatuses 102, server devices 104(1)-104(n), and client devices 106(1)-106(n) are shown in FIG. 1 merely for purposes of providing an illustrative example.

Each of the client devices 106(1)-106(n) of the network traffic management system 100 in this example includes any type of computing device, such as a mobile, desktop, laptop, or tablet computing devices, or other computing device. Additionally, each of the client devices 106(1)-106(n) in this example includes a processor, memory, and a communication interface, which are coupled together by a bus or other communication link (not illustrated), although other numbers or types of components could also be used. Further, each of the client devices 106(1)-106(n) may run interface applications which may provide an interface to make requests for, and receive content stored on, one or more of the server devices 104(1)-104(n) via the network(s) 110. The client devices 106(1)-106(n) may include an input mechanism or other systems to receive inputs from the subscriber, such as a keyboard, mouse, and/or interactive screen by way of example only. The client devices 106(1)-106(n) may further include a display device, such as a display screen or touchscreen, or an input device, such as a keyboard, for example (not illustrated).

Although the exemplary network traffic management system 100 with the network traffic management apparatus 102, the server devices 104(1)-104(n), the client devices 106(1)-106(n), and the communication network(s) 110 are described and illustrated herein, other types or numbers of systems, devices, components, or elements in other topologies can be used. It is to be understood that the systems of the examples described herein are for exemplary purposes, as many variations of the specific hardware and software used to implement the examples are possible, as will be appreciated by those skilled in the relevant art(s).

In some examples, two or more computing systems or devices can be substituted for any one of the systems or devices in any example. Accordingly, principles and advantages of distributed processing, such as redundancy and replication also can be implemented, as desired, to increase the robustness and performance of the devices and systems of the examples. The examples may also be implemented on computer system(s) that extend across any suitable network using any suitable interface mechanisms and traffic technologies, including by way of example only, wireless traffic networks, cellular traffic networks, Packet Data Networks (PDNs), the Internet, intranets, and combinations thereof.

The examples may also be embodied as one or more non-transitory computer readable media having executable or programmed instructions stored thereon, such as in the memory 204 of the network traffic management apparatus 102 by way of example, for one or more aspects of the present technology, as described and illustrated by way of the examples herein. The instructions in some examples include executable code that, when executed by processor 202 of the network traffic management apparatus 102, cause the processor 202 to carry out steps necessary to implement the methods of the examples of this technology that are described and illustrated herein.

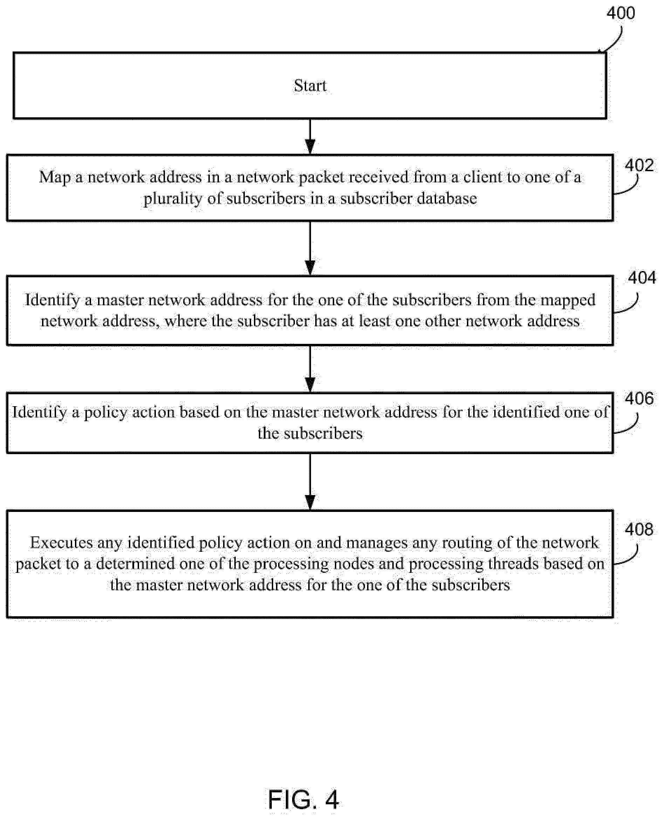

Referring to FIGS. 1-4, an example method for controlling network traffic with a subscriber-aware disaggregator is illustrated. Referring more specifically to FIG. 4, at step 400 this exemplary method starts with the network traffic management apparatus 102, in this example comprising a load-balancer, being configured to consult the subscriber database 212 and the subscriber policies database 214 for routing and policy decisions, respectively, in response to receiving network traffic. In this example, the subscriber database 212 stores a map of network addresses for subscribers to identification information associated with each subscribers and the subscriber policies database 214 stores network traffic management policies and other executable rules assigned to identification information associated with each subscribers.

At step 402, when network traffic arrives at the network traffic management apparatus 102 from a subscriber at one of the client devices 106(1)-106(n), the network traffic management apparatus 102 maps the source network address in each network packet in this network traffic against the stored network addresses in the subscriber database 212 looking for a match. Based on a match between the network addresses, the network traffic management apparatus 102 can obtain in the subscriber database 212 stored identification information for the particular subscriber associated with the matching source network address for that network packet.

At step 404, the network traffic management apparatus 102 can also identify a master network address for the particular subscriber associated with the matching source network address. As described earlier, a subscriber at one of the client devices 106(1)-106(n) may have multiple associated source network addresses, such as network addresses 1A and 1B associated with a "subscriber 1" and network addresses nA and nB associated with a "subscriber n" as shown by way of example only in FIG. 1. Accordingly, in this example, the subscriber database 212 has a stored designation of one of one or more network addresses associated with each of the subscribers as the master network address for that subscriber, although other manners for determining a master network address can be used. When the network traffic management apparatus 102 has identified a master network address for a particular subscriber at one of the client devices 106(1)-106(n), the network traffic management apparatus 102 may cache the master network address for that subscriber to use for future routing decisions during a session.

At step 406 the network traffic management apparatus 102 may also identify one or more executable network policy actions from the subscriber policies database 214 for each packet in the network traffic based on the identified master network address for the one of the subscribers at one of the client devices 106(1)-106(n). By way of example only, an executable network policy action can regulate an amount of bandwidth and/or quota, load balance, execute rate monitoring and metering, caching, denial of service protection, encryption/decryption, session management, address translation, and/or access control by way of example only, although other types of executable network policy actions can be used.

At step 408 the network traffic management apparatus 102 executes the identified executable policy action and routes the network packet to a determined one of the processing nodes 230(1)-230(n) and processing threads T1-T4 in this example based on the identification of the master network address for the one of the subscribers at one of the client devices 106(1)-106(n) associated with the packet. In this example, the network traffic management apparatus 10 executes a hash on the master network address associated with each packet to determine and obtain a routing to one of the processing nodes 230(1)-230(n) and processing threads T1-T4. Since each subscriber with multiple network addresses will always have the same designated master network address, then the resulting hash by the network traffic management apparatus 10 will remain the same each time keeping the routing decision the same. For example, IPv4 and IPv6 network traffic of the same subscriber at one of the client devices 106(1)-106(n) will be processed on the same one of the processing nodes 230(1)-230(n) and processing threads T1-T4 by the network traffic management apparatus 102. As a result, by keeping each packet with the same associated master network address on the same one of the processing nodes 230(1)-230(n) and processing threads T1-T4, the network traffic management apparatus 102 can effectively manage any routing and enforcement of any executable network policy actions for that particular subscriber..

This disclosure is set forth in the context of representative examples that are not intended to be limiting. Accordingly, this disclosure is directed toward all novel and non-obvious features and aspects of the various disclosed examples, alone and in various combinations and sub-combinations with one another. Many variations of the specific hardware and software used to implement the examples are possible, as will be appreciated by those skilled in the relevant art with the benefit of this disclosure. The disclosed systems, methods, and apparatus are not limited to any specific aspect or feature or combinations thereof, nor does the disclosed technology require that any one or more specific advantages be present or problems be solved. Theories of operation, scientific principles, or other theoretical descriptions presented herein in reference to the disclosed technology have been provided for the purposes of better understanding and are not intended to be limiting in scope. The apparatus and methods in the appended claims are not limited to those apparatus and methods that function in the manner described by such theories of operation.

As used in this application the singular forms "a," "an," and "the" include the plural forms unless the context clearly dictates otherwise. The term "coupled" encompasses mechanical, electrical, magnetic, optical, as well as other practical ways of coupling or linking items together, and does not exclude the presence of intermediate elements between the coupled items. The term "and/or" means any one item or combination of items in the phrase.

The recited order of processing elements or sequences, or the use of numbers, letters, or other designations, therefore, is not intended to limit the claimed processes to any order. Although the operations of some of the disclosed methods are described in a particular, sequential order for convenient presentation, it should be understood that this manner of description encompasses rearrangement, unless a particular ordering is required by specific claim language set forth below. For example, operations described sequentially may in some cases be rearranged or performed concurrently. Moreover, for the sake of simplicity, the attached figures may not show all of the various ways in which the disclosed methods can be used in conjunction with other methods.

It should also be well understood that any software functionality described herein can be performed, at least in part, by one or more hardware logic components, instead of software. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), and so forth.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, Java, or any other suitable programming language. Likewise, the disclosed technology is not limited to any particular computer or type of hardware. Certain details of suitable computing devices and hardware are well-known and need not be set forth in detail in this disclosure.

Having thus described many possible embodiments to which the principles of the invention may be applied, it will be recognized by those skilled in the art that the foregoing detailed disclosure is intended to be presented by way of example only, and is not limiting. Various alterations, improvements, and modifications will occur and are intended to those skilled in the art, though not expressly stated herein. These alterations, improvements, and modifications are intended to be suggested hereby, and are within the spirit and scope of the invention. Accordingly, the scope of the claimed subject matter is defined by the following claims. We therefore claim as our invention all that comes within the scope of these claims.

## Claims

1. A method implemented by a network traffic management system comprising one or more server devices, network traffic management devices, or client devices, the method comprising:
mapping a network address in a network packet received from a client to one of a plurality of subscribers in a subscriber database;
identifying a master network address for the one of the subscribers from the mapped network address, wherein the subscriber has at least one other network address associated with the one of the subscribers; and
routing the network packet to a determined one of a plurality of processing nodes and processing threads based on the master network address for the one of the subscribers.

2. The method of claim 1, further comprising:
identifying a policy action based on the master network address for the identified one of the subscribers; and
executing the policy action on the network packet received from the client.

3. The method of claim 2 wherein the policy action comprises an executable network traffic instruction assigned to the one of the subscribers.

4. The method of claim 1, wherein the routing the network packet to the determined one of the plurality of processing nodes and processing threads is further based on a hash of the master network address for the one of the subscribers.

5. The method of claim 1, wherein the mapped network address and the at least one other network address associated with the one of the subscribers comprise an Internet Protocol version four (IPv4) address and an Internet Protocol version six (IPv6) address.

6. A network traffic management apparatus, comprising memory comprising programmed instructions stored thereon and one or more processors configured to be capable of executing the stored programmed instructions to carry out the steps of the method according to one or more of the claims from 1 to 5.

7. A non-transitory computer readable medium having stored thereon instructions comprising executable code that, when executed by one or more processors, causes the processors to carry out the steps of the method according to one or more of the claims from 1 to 5.

8. A network traffic management system, comprising one or more server devices, network traffic management devices, or client devices with memory comprising programmed instructions stored thereon and one or more processors configured to be capable of executing the stored programmed instructions to carry out the steps of the method according to one or more of the claims from 1 to 5.
